# EUROPEAN PATENT APPLICATION

(11) **EP 3 020 963 A1**
(43) Date of publication of application: **18.05.2016**
(21) Application number: 14192993.5
(22) Date of filing: 13.11.2014
(51) Int. Cl.: F03D 13/00

(54) **Method to measure free wind parameters**

(71) Applicant: Siemens Aktiengesellschaft, 80333 München (DE)
(72) Inventor: Egedal, Per, 7400 Herning (DK)

(57) **Abstract**

The invention relates to a method to measure free wind parameters, which are needed to validate the operation of a wind turbine.

According to the method invented free wind parameters are measured by an unmanned aerial vehicle. The unmanned aerial vehicle is guided remote controlled along a flight-path in the close proximity of a wind turbine. The measured free wind parameters are used for the validation of the operation of the wind turbine.

## Description

The invention relates to a method to measure free wind parameters, which are needed to validate the operation of a wind turbine.

For the validation of the operation of a wind turbine it is necessary to measure its power curve performance as well as the load, which is acting on the wind turbine, in dependency to so called free wind parameters (i.e. wind speed, turbulences, air temperature, air humidity, etc).

The free wind parameters need to be measured near the wind turbine or in its close proximity.

It is known as most normal approach to erect a "met-mast" (a mast for dedicated meteorological measurements) for this purpose. This setup is even defined in the regulation IEC 61400-12. A met-mast shows a typical height of 100 m up to 150 m. The met-mast carries sensors for the wind parameter measurements. The sensors are connected with a data acquisition system, which also receives other sensor data, i.e. produced electrical power and rotational speed, from dedicated wind turbines.

The use of met-masts is expensive due to the needed stability and height of the mast. Even the erection of the met-mast as well as its removal is expensive, too.
The positioning of the mast needs to be done quite carefully to get the most appropriate measurement result. The met mast, once erected, is static in its position thus the chosen position of the met mast might influence all subsequent measurements by adding a kind of position based offset.
It is another drawback of the met-mast-solution that the wind speed can be measured only from one wind direction if the met-mast is positioned in the shadow of other wind turbines, masts, etc. This kind of interference even might lead to unwanted wake effects, which might influence the measurements in turn.

It is known to use a LIDAR-based wind measurement system for the measurement of free wind parameters. This kind of LIDAR system is often remote controlled, while the remote control might be radio based. The LIDAR components might be placed on the ground or they might be installed at wind turbine components (i.e. at the nacelle of the wind turbine).

The use of a LIDAR-based wind measurement system is expensive due to its complexity. Even the positioning of the LIDAR components needs to be done quite carefully to get the most appropriate measurement result. Finally the LIDAR-components, once installed and implemented, are static in their position.

It is the aim of the invention, to provide an improved method to measure free wind parameters, which are needed for the validation of the operation of a wind turbine.

This aim is reached by the features of claim 1. Preferred configurations are addressed by the dependent claims.

According to the method invented free wind parameters are measured by an unmanned aerial vehicle. The unmanned aerial vehicle is guided remote controlled along a flight-path in the close proximity of a wind turbine. The measured free wind parameters are used for the validation of the operation of the wind turbine.

In a preferred configuration the measured free wind parameters are combined with an electrical output power curve of the wind turbine and/or with a load performance curve of the wind turbine for the validation.

In a preferred configuration the wind speed and/or wind turbulences and/or the air temperature and/or the air humidity is measured as free wind parameter by the unmanned aerial vehicle.

In a preferred configuration the flight path is chosen in a way that the measured free wind parameters are replicable.

In a preferred configuration the flight path is chosen in a way that the measured free wind parameters reflect the actual situation as experienced by the wind turbine.

In a preferred configuration the unmanned aerial vehicle even detects rain, dust or ice on the blades thus this information is considered additionally with the measured free wind parameters.

In a preferred configuration the measured free wind parameters are combined with GPS-data, which are acquired by the unmanned aerial vehicle during its flight along the flight path. Thus the measurements are matched with dedicated GPS-positions.

In a preferred configuration the measured free wind parameters are uploaded via Internet for further post-processing.

The unmanned aerial vehicle UAV carries sensors, which are prepared and arranged to measure the free wind parameters (i.e. wind speed, turbulences, air temperature, air humidity, etc.).

In a preferred configuration the UAV even carries a camera thus extra information of the performance of the wind turbine and its conditions can be gathered.
For example rain, dust or ice on the blades are detected and are considered additionally.

The invention allows an accurate measurement of the free wind parameters even in close or closest proximity of a dedicated wind turbine.

The method invented is quite cheap as UAV's are available as specific carrier-platforms, to be used for any purposes. Thus the UAV's are available today for a much lower price than years before.

The UAV based measurements can be done with approved sensor technology, thus the method invented is based on cheap and proven technology.

By using an UAV the respective sensors can be placed anywhere around the wind turbine - preferably the UAV follows the direction of the incoming wind. Finally the UAV is placed in front of the wind turbine.

With the method invented it is possible to capture the needed data quite quick and cheap.

Additionally an UAV is simple to operate and it is quite small in its dimensions. Thus there is no need for expensive ground-personal and there is no need for elaborate and specific transportation.

The method invented is shown by the help of the figures as described next.
The figures show preferred configurations and do neither limit the scope of the invention nor the scope of the claims.
- FIG 1: shows the principle idea of the method invented,
- FIG 2: shows different UAV to be used for the method invented, and
- FIG 3: shows a preferred configuration for gathering the free wind parameters according to the invention.

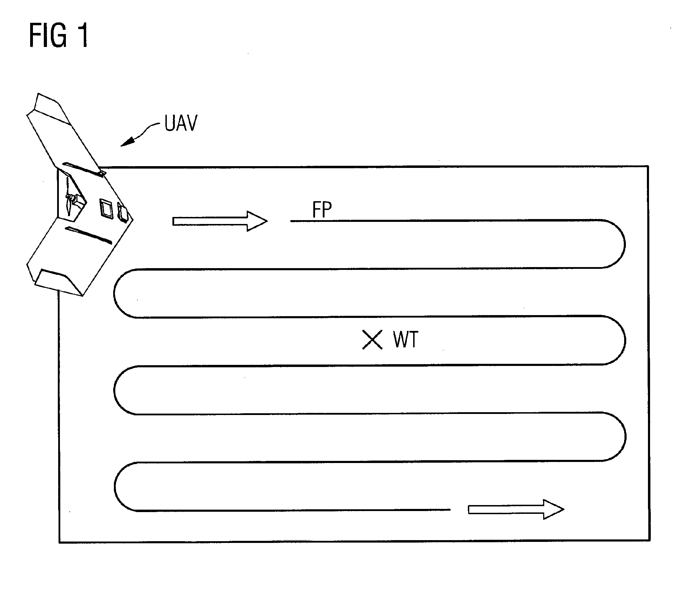

FIG 1 shows the principle idea of the method invented. According to the method invented the Unmanned Aerial Vehicle UAV is guided in front of a wind turbine WT along a predetermined flight path FP.

The flight-path FP is chosen in a way that the close or even the closest proximity of the wind turbine WT is monitored to get appropriate measurements of free wind parameters, which are needed to validate the operation of a wind turbine afterwards.

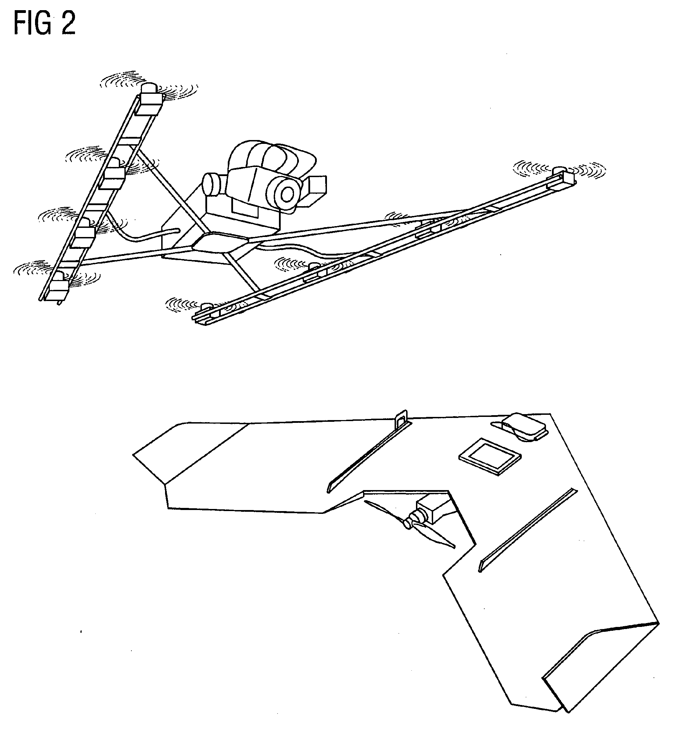

FIG 2 shows two possible UAV to be used. One is named "Falcon-PARS", a kind of helicopter which is offered by the company "ISTS Americas Corporation" for example. The other one is a plane, offered by the company SENSEFLY, Switzerland, for example.

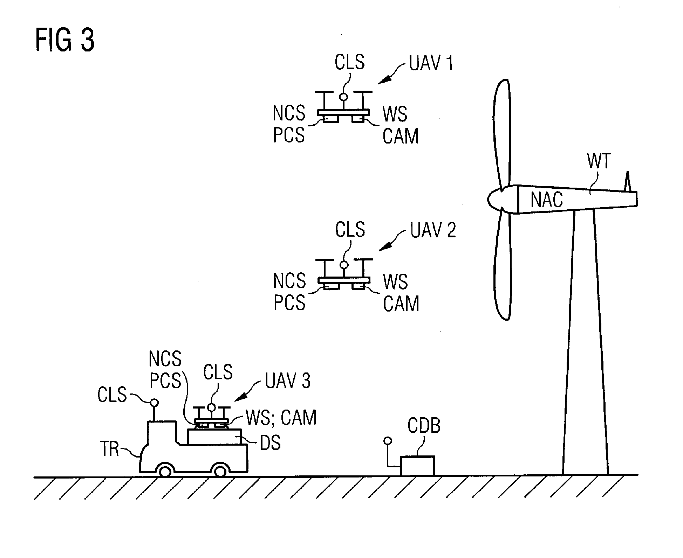

FIG 3 shows a preferred configuration for gathering the free wind parameters according to the invention.

Two unmanned aerial vehicle UAV1 and UAV2 are flying in the close proximity (i.e. front) of a wind turbine WT, while a third aerial vehicle UAV3 is placed in a docking station DS.

By using three unmanned aerial vehicles UAV1, UAV2 and UAV3 a rolling and continuous free wind parameter measurement is ensured.

In a preferred configuration the docking station DS is part of a truck TR or the like, thus the whole UAV-based system is mobile.

The unmanned aerial vehicle UAV1, UAV2 and UAV3 comprise a usual navigation control system NCS and with a usual position control system PCS.

Furthermore each of unmanned aerial vehicles is equipped with a wind sensor WS and with a communication link system CLS.

The two unmanned aerial vehicles UAV1 and UAV2 are continuously sending information about their position and about the measured wind speed to the truck TR - especially to the docking station DS.

The docking station DS collects the data from the wind sensors of the UAV's and sends it to a central data base CDB.

The docking station DS also coordinates the position of the UAV's as a function of the yaw position of the nacelle NAC of the wind turbine WT. It also coordinates the recharge / battery exchange of the UAV's - in this case of the UAV3 - being located at the docking station DS.

A camera CAM can also be placed on the UAV's thus extra information of the performance of the wind turbine and its conditions are gathered.

For example rain, dust or ice on the blades can be detected and can be considered additionally during the evaluation of the free wind parameters.

## Claims

1. Method to measure free wind parameters,
- wherein the free wind parameters are measured by an unmanned aerial vehicle,
- wherein the unmanned aerial vehicle is guided remote controlled along a flight-path in the close proximity of a wind turbine,
- wherein the measured free wind parameters are used for the validation of the operation of the wind turbine.

2. Method according to claim 1, wherein the measured free wind parameters are combined with an electrical output power curve of the wind turbine and/or with a load performance curve of the wind turbine for the validation.

3. Method according to claim 1, wherein the wind speed and/or wind turbulences and/or the air temperature and/or the air humidity is measured as free wind parameter by the unmanned aerial vehicle.

4. Method according to claim 1, wherein the flight path is chosen in a way that the measured free wind parameters are replicable.

5. Method according to claim 1, wherein the flight path is chosen in a way that the measured free wind parameters reflect the actual situation as experienced by the wind turbine.

6. Method according to claim 1, wherein the unmanned aerial vehicle even detects rain, dust or ice on the blades thus this information is considered additionally with the measured free wind parameters.

7. Method according to claim 1, wherein the measured free wind parameters are combined with GPS-data, which are acquired by the unmanned aerial vehicle during its flight along the flight path.

8. Method according to claim 1, wherein the measured free wind parameters are uploaded via Internet for further post-processing.
